# EUROPEAN PATENT SPECIFICATION

(11) **EP 2 180 297 B1**
(45) Date of publication and mention of the grant of the patent: **23.03.2016**
(21) Application number: 09013370.3
(22) Date of filing: 22.10.2009
(51) Int. Cl.: G01D 5/245, G01D 11/30

(54) **Rotation detector attachment decelerating device**
Verlangsamungsvorrichtung für eine Rotationsdetektorbefestigung
Dispositif de décélération de fixation de détecteur de rotation

(30) Priority: 24.10.2008 JP 2008274472
(43) Date of publication of application: 28.04.2010
(73) Proprietor: Sumitomo Heavy Industries, Ltd., Tokyo 141-6025 (JP)
(72) Inventor: Haga, Takashi, Tokyo 474-8501 (JP); Shizu, Yoshitaka, Tokyo 474-8501 (JP)
(74) Representative: Carstens, Dirk Wilhelm

(56) References cited:
- EP-A1- 1 437 575
- EP-A1- 1 930 625
- EP-A2- 1 070 874
- US-A1- 2002 088 293
- US-A1- 2005 014 595

## Description

### Field of the Invention

The present invention relates to a rotation detector attachment decelerating device.

### Description of the Related Art

For example, JP 2001-99245 A discloses a rotation detector attachment decelerating device G0 as shown in Fig. 7. The decelerating device G0 is of a so-called eccentric oscillation internally meshing type, and includes a decelerating mechanism part having a first shaft 14 which is coaxially formed with an input shaft 12 so as to surround the input shaft 12; a second shaft 16 which is coaxially formed with the first shaft 14 so as to surround the first shaft 14; bearings 18 and 20 which are interposed between the first shaft 14 and the second shaft 16 so that one of the first and second shafts 14 and 16 is rotatably supported to the other thereof; and a decelerating mechanism 22 which decelerates the rotation input to the input shaft 12 and outputs the rotation from one of the first shaft 14 and the second shaft 16 in the state where the other of the first and second shafts 14 and 16 is fixed.

In the decelerating device G0, a rotation detector 24 is interposed between the first and second shafts 14 and 16 so as to detect the rotation information of one of the first and second shafts 14 and 16 with respect to the other thereof.

The rotation detector 24 is formed in a cylindrical shape, and includes an incremental-type code plate 26 which is formed in an outer peripheral surface 24a so as to record position information through magnetism; a detection portion 28 which detects the position information of the code plate 26 and outputs the position information by changing the position information into an electric signal; and an electronic unit 30 which processes the electric signal output from the detection portion 28. In addition, the code plate 26 is formed by a nonmagnetic body, for example, aluminum and a magnetic body which is coated on the outer periphery of the nonmagnetic body and has position information recorded thereon. The magnetic body having the position information recorded thereon is adapted so as not to directly come into contact with the first shaft 14.

However, in the above-described decelerating device G0, since it is necessary to avoid the interference with the input shaft and to correspond to the hollow structure of the decelerating device, the rotation detector 24 having a particular structure such as a hollow structure has to be used. As a result, a problem arises in that the cost of the rotation detector extremely increases.

Similarly, EP 1 070 874 A2 discloses a speed reducer with a rotation detector wherein the rotation detector comprises a code plate having the positional information corresponding to the rotation, a detecting portion for detecting the positional information of the code plate to transform the positional information to an electric signal for output, and an electronic device having the function of processing the electric signal. The rotation detector can detect the output rotation of a first shaft which is an output shaft at high resolving power and at high accuracy. Also, the speed reducer with rotation detector is used with a motor to enable the full-closed control of the motor to be made at high resolving power and at high accuracy.

US 2002/088293 A1 discloses absolute sensor which has a high speed side encoder mounted on a high speed rotational shaft, a low speed rotational shaft arranged coaxially with the high speed rotational shaft, and a planetary gear mechanism for reducing the speed of rotation of the high speed rotational shaft and delivering the rotation of reduced speed to the low speed rotational shaft. The planetary gear mechanism has a fixed sun internal gear, a front stage planetary gear, a rear stage planetary gear, and an output sun internal gear connected to the rear stage planetary gear and low speed rotational shaft, wherein the front and rear stage planetary gears are rotatably supported by an eccentric shaft portion of the shaft. The planetary gear mechanism can be constituted so that the input and output shafts are arranged coaxially.

EP 1 437 575 A1 discloses a multi-rotation type encoder including a first encoder attached to a rotating shaft of a rotating machine for detecting an absolute value rotational angle within one rotation, and a second encoder for counting a multi-rotation amount of the rotating shaft by using a speed reducing mechanism by magnetic coupling and the second encoder is constituted by a first magnetic gear directly connected to the rotating shaft and magnetized in multiple poles and at least one second magnetic gear arranged to be opposed thereto in non-contact and magnetized in multiple poles by a number of magnetic poles larger than that of the first magnetic gear and is constituted to count a multi-rotation amount by detecting a rotational angle of the second magnetic gear by the second encoder.

Attention is also drawn to US 2005/014595 A1 and EP 1 930 625 A1.

### SUMMARY OF THE INVENTION

The present invention is contrived to solve the above-described problems, and an object of the invention is to provide a rotation detector attachment decelerating device capable of using a low-cost (for example, a general-purpose) rotation detector.

The above-described object is achieved by a rotation detector attachment decelerating device having a function of detecting a rotation of an output shaft, as set forth in claim 1. Preferred embodiments of the present invention may be gathered from the dependent claims.

In the invention, the auxiliary rotation shaft is disposed in parallel, but not coaxial, to the output shaft of the decelerating device, the rotation is transmitted from the output shaft to the auxiliary rotation shaft, and then the rotation of the auxiliary rotation shaft is detected by the rotation detector, thereby detecting the rotation of the output shaft of the decelerating device. For this reason, for example, even in the case where the input shaft and the output shaft are coaxially disposed or the input shaft is formed as a hollow structure, it is not necessary to use a rotation detector having a particular structure such as a hollow structure. That is, since it is possible to use, for example, a general-purpose detector at a low cost, it is possible to realize a decrease in cost of the decelerating device. Further, a highly precise general-purpose detector may be used depending on the use purpose, and in this case, it is possible to further improve the detection precision.

According to the invention, it is possible to detect the rotation of the output shaft of the decelerating device at a low cost.

### BRIEF DESCRIPTION OF THE DRAWINGS

Fig. 1 is a sectional view showing a rotation detector attachment decelerating device according to an embodiment of the invention.
Fig. 2 is a side view showing the decelerating device.
Fig. 3 is a sectional view showing the rotation detector attachment decelerating device according to another embodiment of the invention.
Fig. 4 is a side view showing the decelerating device.
Fig. 5 is a sectional view showing the rotation detector attachment decelerating device according to still another embodiment of the invention.
Fig. 6 is an enlarged sectional view showing a main part of the rotation detector attachment decelerating device shown in Fig. 5.

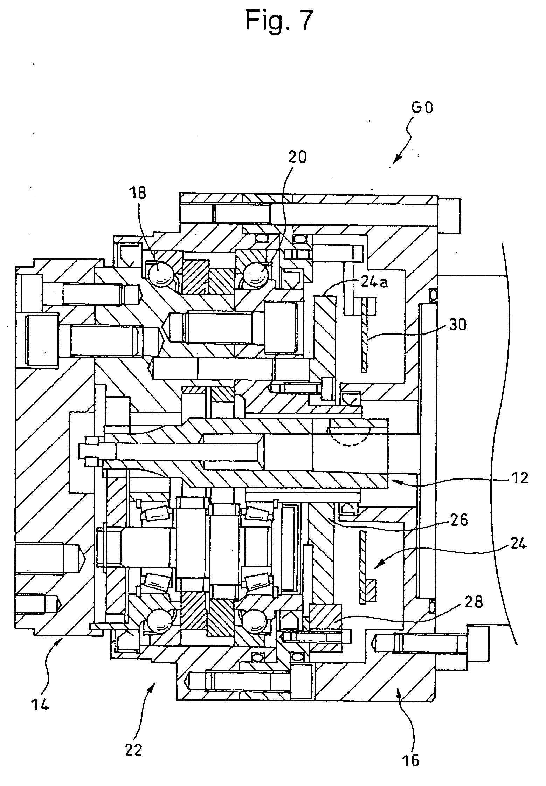

Fig. 7 is a sectional view showing the known rotation detector attachment decelerating device.

### DETAILED DESCRIPTION OF THE INVENTION

Hereinafter, an embodiment of the invention will be described in detail with reference to the accompanying drawings.

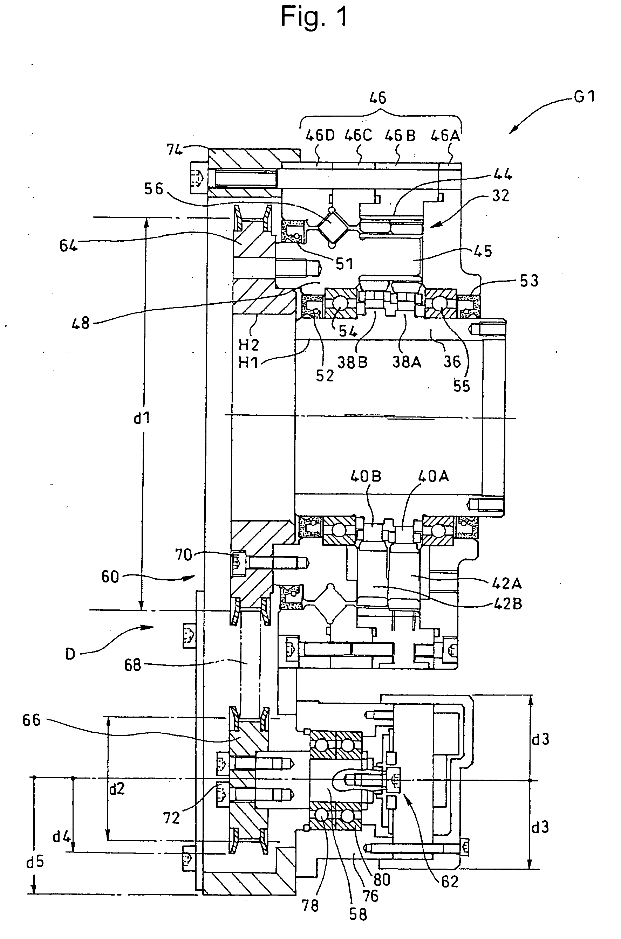

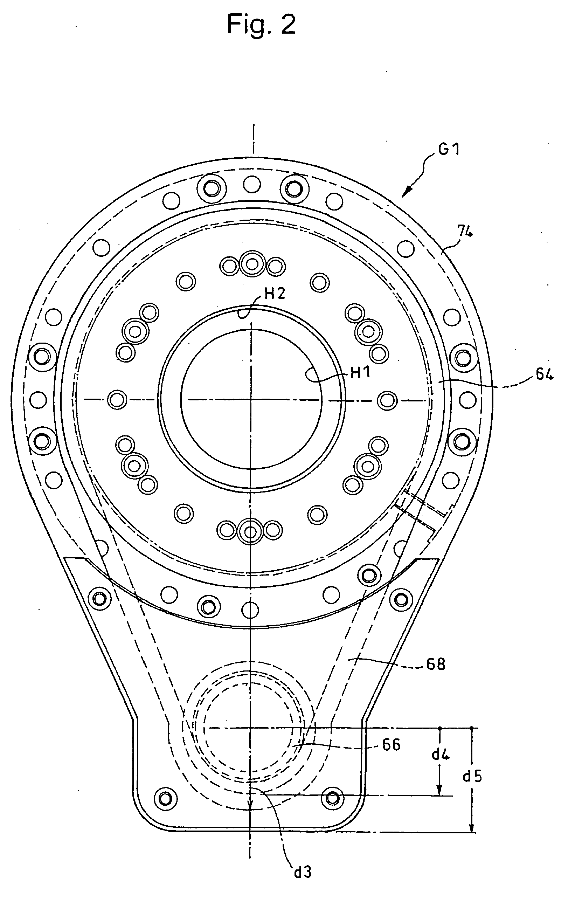

Figs. 1 and 2 show an example of a rotation detector attachment decelerating device according to an embodiment of the invention.

The decelerating device G1 has a decelerating portion (decelerating mechanism part) 32 of a so-called oscillation-type internally meshing planetary gear structure, and is formed as a hollow-type decelerating device which has a hollow portion H1 formed in a radial center portion of the decelerating portion 32 so as to penetrate therethrough.

The decelerating device G1 includes an input shaft 36 which has the hollow portion H1; eccentric bodies 38A and 38B which are integrally formed with the input shaft 36; external tooth gears 42A and 42B which are respectively mounted to the outer peripheries of the eccentric bodies 38A and 38B through rollers 40A and 40B so as to be oscillatable and rotatable; and an internal tooth gear 44 with which the external tooth gears 42A and 42B internally mesh.

The external tooth gears 42A and 42B and the internal tooth gear 44 have a slight difference in number of the teeth of gears (for example, "1").

The internal tooth gear 44 is incorporated into a second casing 46B so as to be fixed thereto. In addition, the rotation components of the external tooth gears 42A and 42B are extracted from an output block 48, incorporated into an inner pin 45, through the inner pin 45. The input shaft 36 is supported to a first casing 46A and the output block 48 through a pair of bearings 54 and 55.

The output block 48 is supported to third and fourth casings 46C and 46D through a cross roller 56. The connection between the output block 48 and the relative machine is carried out in such a manner that a bolt (not shown) is inserted into a bolt hole 48A of the output block 48 through a first pulley 64.

Here, a rotation detection system D for detecting the rotation (in detail, the rotation angle and the rotation direction) of the output block (output shaft) 48 of the decelerating device G1 will be described in detail.

The rotation detection system D includes an auxiliary rotation shaft 58 which serves as a detection target instead of the output block (output shaft) 48 and is disposed in parallel to the output block 48; rotation transmitting means 60 for transmitting the rotation of the output block 48 to the auxiliary rotation shaft 58; and a known encoder (rotation detector) 62 which detects the rotation of the auxiliary rotation shaft 58.

The rotation transmitting means 60 is friction power transmitting means including the first pulley (a rotation body which rotates together with the output shaft) 64; a second pulley (a rotation member which rotates together with the auxiliary rotation shaft) 66; and a belt 68 which transmits the rotation of the first pulley 64 to the second pulley 66.

The first pulley 64 is coaxially mounted to the output block 48 through a bolt 70. The first pulley 64 is formed as a hollow-type pulley which has a hollow portion H2 axially penetrating the radial center portion thereof, and the hollow portion H2 of the first pulley 64 is continuous to the hollow portion H1 of the decelerating device.

In the decelerating device G1, the auxiliary rotation shaft 58 is disposed in parallel to the output block 48. The second pulley 66 is integrally mounted to the auxiliary rotation shaft 58 through a bolt 72, and the belt 68 connects the first pulley 64 to the second pulley 66 so that a power transmission therebetween can be carried out.

An encoder casing 76 is integrally mounted to a pulley cover 74 which coats the first and second pulleys 64 and 66. The auxiliary rotation shaft 58 is rotatably supported to the encoder casing 76 in a cantilever state through bearings 78 and 80. In the embodiment, an effective diameter d2 of the second pulley 66 is smaller than an effective diameter d1 (a diameter of a portion where the belt 68 is wound, that is, a pitch diameter) of the first pulley 64. That is, the rotation transmitting means 60 has a function of increasing the speed of the rotation of the output block 48 and transmitting the rotation to the auxiliary rotation shaft 58. In the encoder casing 76, a maximum diameter d3 in the circumference of the auxiliary rotation shaft 58 is set to be larger than a maximum diameter d4 of the second pulley 66.

In addition, the reference numerals 51 to 53 denote oil seals.

Next, the action of the rotation detector attachment decelerating device G1 will be described.

When the input shaft 36 rotates, the eccentric bodies 38A and 38B integrally formed with the input shaft 36 rotate. When the eccentric bodies 38A and 38B rotate, the external tooth gears 42A and 42B mounted to the outer peripheries of the eccentric bodies 38A and 38B oscillatingly rotate through the rollers 40A and 40B. In the embodiment, the internal tooth gear 44 is incorporated into the second casing 46B so as to be fixed thereto. For this reason, the free rotation of the external tooth gears 42A and 42B is restrained, and the external tooth gears 42A and 42B just oscillate. As a result, the meshing positions between the internal tooth gear 44 and the external tooth gears 42A and 42B are sequentially deviated in accordance with the rotation of the eccentric bodies 38A and 38B. A difference in number of teeth between the internal tooth gear 44 and the external tooth gears 42A and 42B is set to be a small value (for example, "1"). As a result, whenever the input shaft 36 rotates once, the external tooth gears 42A and 42B rotate so that the phases of the external tooth gears 42A and 42B are deviated from the phase of the internal tooth gear 44 by an amount corresponding to the difference in number of teeth.

The rotation components of the external tooth gears 42A and 42B are extracted in the form of the rotation of the output block 48 through the inner pin 45.

The rotation of the output block 48 is directly changed to the rotation of the first pulley 64, and is transmitted to the second pulley 66 through the belt 68. When the second pulley 66 rotates, the auxiliary rotation shaft 58 rotates, and the rotation is detected by the encoder 62. Since the effective diameter d2 of the second pulley 66 is smaller than the effective diameter d1 of the first pulley 64, the speed of the rotation of the output block 48 increases, and the rotation is transmitted to the auxiliary rotation shaft 58. In addition, the auxiliary rotation shaft 58 is installed inside the encoder casing 76 so as to be away from a casing 46 (46A to 46D) of the body portion of the decelerating device G1. Then, in the embodiment, the rotation of the output block 48 is transmitted to the auxiliary rotation shaft 58 through the belt 68 capable of absorbing the vibration. For this reason, even when the external tooth gears 42A and 42B oscillate at a high speed, the vibration of the external tooth gears 42A and 42B does not influence the auxiliary rotation shaft 58, and the speed of the rotation of the output block 48 is increased. Accordingly, a minute non-uniform rotation degree of the output block 48 can be amplified so as to be accurately obtained by the encoder 62. In addition, since the rotation of the output block 48 is transmitted by the belt (friction power transmitting means) 68, the radial dimension of the decelerating device is reduced and the backlash hardly occurs in the decelerating device compared with the case where the power transmission is carried out by the gear. Accordingly, it is possible to improve the detection precision.

Since the diameter of the auxiliary rotation shaft 58 is set in accordance with the diameter of the most common detection target shaft of the most common encoder 62, for example, it is possible to use a highly precise common encoder at a low cost. In addition, the auxiliary rotation shaft 58 is supported to the encoder casing 76 in a cantilever state, and the second pulley 66 is mounted to the auxiliary rotation shaft 58 in a cantilever state. For this reason, it is possible to minimally suppress that the axial length of the decelerating device G1 extends to the load side (the relative machine side) than the first and second pulleys 64 and 66.

In addition, since the maximum diameter d3 of the circumference of the auxiliary rotation shaft of the encoder casing 76 is set to be smaller than the minimum diameter d5 of the circumference of the second pulley 66 of the pulley cover 74, even when the encoder 62 exists, it is possible to minimally suppress the radial protruding amount of the decelerating device G1.

Further, since the encoder 62 is offset from the axis of the decelerating portion 32 (compared with the case where the encoder and the decelerating portion are coaxially disposed), even when a leakage of a lubricant of the decelerating device G1 occurs, the lubricant does not have a negative influence on the encoder 62 (which is adversely influenced by oil).

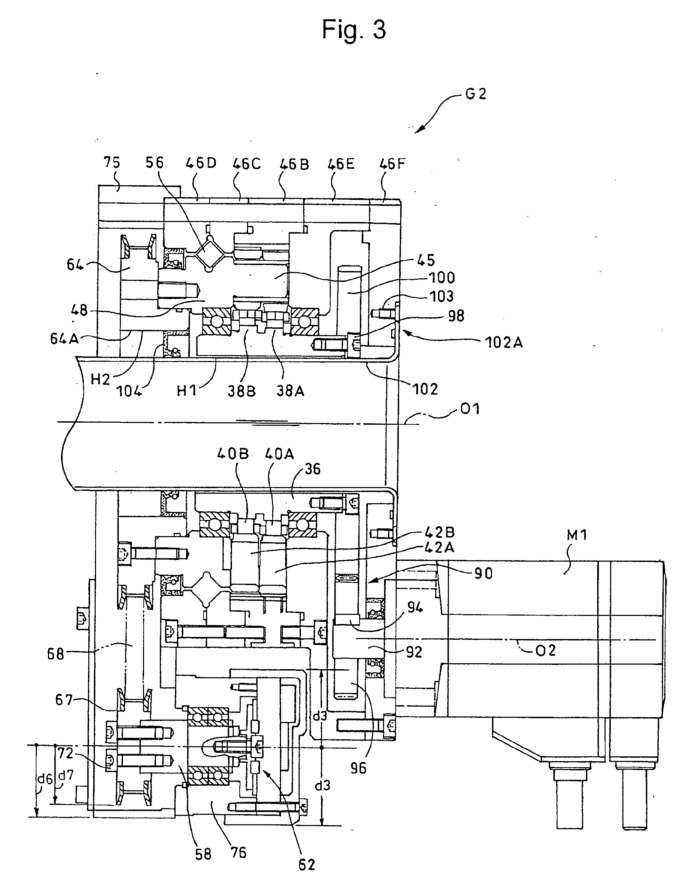

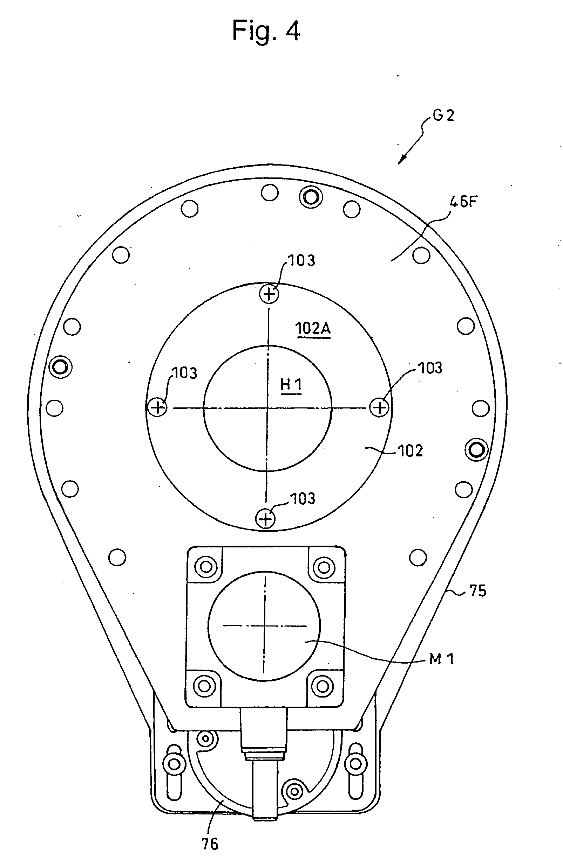

Next, Figs. 3 and 4 show an example of the rotation detector attachment decelerating device according to another embodiment of the invention.

In this example, in order to connect a motor M1 to the decelerating device G1, the first casing 46A (Fig. 1) of the decelerating device G1 is changed to fifth and sixth casings 46E and 46F having a shape capable accommodating a parallel shaft gear set 90. That is, a decelerating device G2 is obtained in such a manner that the decelerating device G1 further includes the parallel shaft gear set (front stage decelerating portion) 90 and the motor M1.

The motor M1 is mounted to the sixth casing 46F. When the motor M1 is viewed in the axial direction thereof, the motor M1 almost overlaps with the encoder casing 76 (see Fig. 4). With this configuration, since the encoder 62 can be mounted to a space, which can be a dead space in actual, (even when the encoder 62 does not exist), it is possible to prevent as much as possible the decelerating device from increasing in the radial direction due to the existence of the encoder 62.

A spur pinion 96 is mounted to a motor shaft 92 of the motor M1 through a key 94. In addition, a spur gear 100, capable of meshing with the spur pinion 96, is mounted to the input shaft 36 through a bolt 98. The rotation of the motor shaft 92 of the motor M1 is input to the input shaft 36 through the spur pinion 96 and the spur gear 100.

In addition, a protection pipe 102 is disposed in the hollow portion H1 of the decelerating device G1 and the hollow portion H2 of the first pulley 64. In the protection pipe 102, one end (in the example shown in the drawing, the opposite load-side end) 102A thereof is fixed to the sixth casing 46F of the decelerating device G2 through a bolt 103, and an oil seal 104 is disposed in the outer periphery of the other end (in the example shown in the drawing, a position corresponding to the inner periphery of the hollow portion H2 of the first pulley 64). Accordingly, for example, compared with the decelerating device G1 shown in Fig. 1, the oil seal 53 may be omitted. In addition, the oil seal 104 is disposed between the fixed protection pipe 102 and the inner periphery 64A of the first low-speed pulley 64 (compared with the oil seal 52), it is possible to reduce the rotation loss and to improve the durability of the oil seal 104. Since the rotation speed relative to the seal is low, it is possible to improve the sealing property. This configuration is obtained by appropriately using the inner peripheries of the protection pipe 102 and the first pulley 64. Since the protection pipe 102 is disposed inside the hollow portions H1 and H2, even in the case where, for example, a wiring or the like passes through the hollow portions H1 and H2, it is possible to effectively prevent the damage of the wiring.

Further, the maximum diameter d7 of the second pulley 67 rotating together with the auxiliary rotation shaft 58 is smaller than the maximum diameter d3 of the encoder casing 76. In many cases, the size of the general-purpose encoder casing 76 is set. Meanwhile, the maximum diameter d7 of the second pulley 67 largely influences the minimum diameter d6 of the circumference of the auxiliary shaft of the pulley cover 75. Likewise, since the maximum diameter d7 of the second pulley 67 is set to be smaller than the maximum diameter d3 of the encoder casing 76 (in short, for example, when the encoder casing 76 in use is small, the maximum diameter d7 of the second pulley 67 is set to be small in accordance with the size of the encoder casing 76), it is possible to allow the minimum diameter d6 of the circumference of the auxiliary shaft of the pulley cover 75 to be smaller than the maximum diameter d3 of the encoder casing 76 (or it is possible to allow the minimum diameter d6 not to be excessively larger than the maximum diameter d3), and thus to suppress the entire radial dimension of the decelerating device to be small.

In the above-described embodiment, the input shaft 36 exists at the center portion of the decelerating device G1 (G2), and the decelerating device G1 (G2) of the internally meshing planetary gear mechanism is employed in which the external tooth gears 42A and 42B oscillate by the eccentric bodies 38A and 38B formed in the outer periphery of the input shaft 36, but in the invention, the particular configuration of the decelerating device is not particularly limited. Further, the configuration in which the power is input from the motor to the decelerating device is not particularly limited to the above-described embodiment.

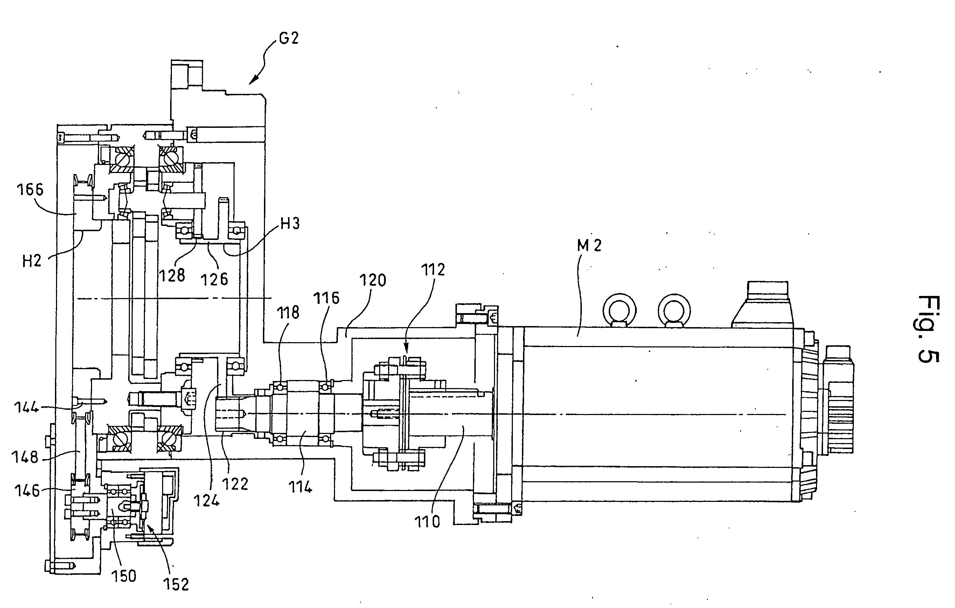

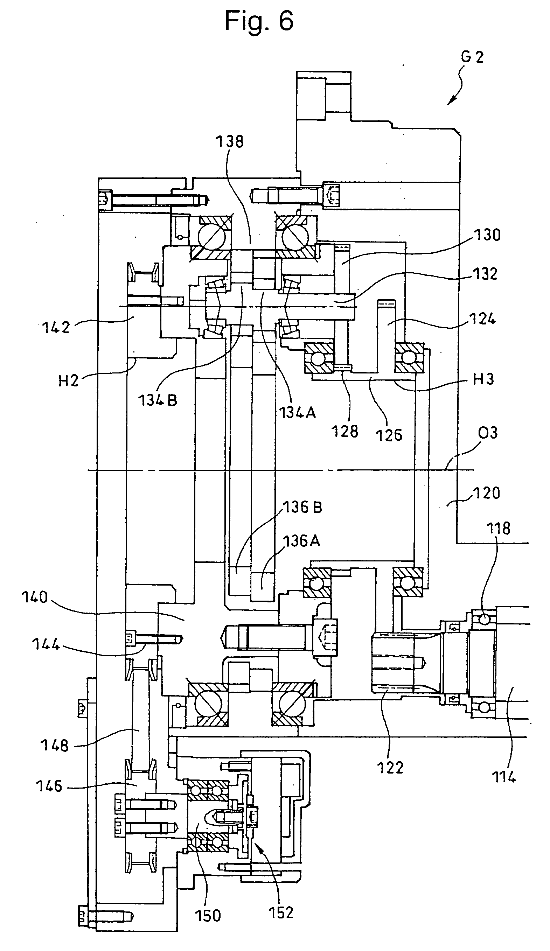

For example, the invention may be applied to the decelerating device having the configuration shown in Figs. 5 and 6. In addition, Fig. 6 is an enlarged view showing a main part in Fig. 5.

In the examples shown in Figs. 5 and 6, an output of a motor shaft 110 of a motor M2 is transmitted to a pinion shaft 114 via a connection member 112. The pinion shaft 114 is supported to a connection casing 120 by a pair of bearings 116 and 118. A spur pinion 122 is formed in the front end of the pinion shaft 114 by cutting. The spur pinion 122 meshes with a spur gear 124. The spur gear 124 is continuous to a cylindrical portion 126 having a hollow port H3, and a center gear 128 having a dimension smaller than that of the spur gear 124 is formed in a part of the outer periphery of the cylindrical portion 126. Three distribution gears 130 (in Figs. 5 and 6, only one of the three distribution gears is shown) mesh with the center gear 128, and three eccentric body shafts 132 (in Fig. 6, only one of the three eccentric body shafts is shown) are simultaneously driven.

Eccentric bodies 134A and 134B are integrally formed with each eccentric body shaft 132. When the eccentric bodies 134A and 134B of each eccentric body shaft 132 rotate at the same phase, external tooth gears 136A and 136B oscillate. In the example, since the internal tooth gear 138 is fixed, the external tooth gears 136A and 136B oscillate once and rotate by an amount corresponding to the difference in the number of teeth of the internal tooth gear 138 whenever each eccentric body shaft 132 rotates once. This rotation is extracted from a carrier 140 in the form of the revolution about the axis 03 of the decelerating device G2 having three eccentric body shafts 132. That is, in the decelerating device G2, the carrier 140 corresponds to the output member.

A first pulley 142 is fixed to the carrier 140 through a bolt 144, and an auxiliary rotation shaft 150 rotates through a second pulley 146 and the belt 148 in the same manner as described above. The rotation of the auxiliary rotation shaft 150 is detected by an encoder 152.

The configuration and the effect including the rotation of the carrier 140 as the output member of the first pulley 142, the transmission through the belt 148, the rotation of the second pulley 146, the rotation of the auxiliary rotation shaft 150, and the rotation detection through the encoder 153 are the same as those of the above-described embodiment.

• Even in the embodiment, the decelerating mechanism part is formed as a large-diameter hollow structure. However, since the encoder 152 just detects the rotation of the small-diameter auxiliary rotation shaft 150, it is possible to use the highly precise general-purpose encoder 152 at a low cost.

Further, most of the first pulley, the belt, the second pulley, the auxiliary rotation shaft, the encoder, and the encoder casing used in the above-described embodiment can be commonly used upon being mounted to the output shafts of various decelerating devices.

Likewise, according to the invention, even in the case where the input shaft and the output shaft are coaxially disposed or the input shaft is formed as a hollow structure, it is not necessary to use a rotation detector having a particular structure such as a hollow structure. That is, since it is possible to use, for example, a general-purpose detector at a low cost, it is possible to realize a decrease in cost of the decelerating device. Further, a highly precise general-purpose detector may be used depending on the application, and in this case, it is possible to further improve the detection precision.

In the above-described embodiments, it is possible to efficiently use a dead space formed by the decelerating device and the motor by overlapping the motor with at least a part of the rotation detector when seen in the axial direction of the motor. However, for example, the motor may be disposed so as not to overlap with the rotation detector when seen in the axial direction of the motor. Since the rotation detector such as the encoder is a delicate component, the rotation detector may be comparatively frequently broken. Accordingly, with such a configuration, it is advantageous in that the rotation detector can be easily exchanged.

Further, in the example shown in Fig. 5, the motor does not overlap with the rotation detector, but an axial extraction space for the rotation detector is ensured. For this reason, it is easy to exchange the rotation detector.

In the above-described embodiments, the decelerating device having the hollow-type decelerating mechanism part is exemplified. However, the invention is not limited to the decelerating device having the hollow-type decelerating mechanism part. For example, a decelerating device without a hollow portion may be used. In addition, a decelerating device having coaxial input and output shafts may be used.

The configuration of the decelerating mechanism part of the decelerating device is not limited to the configuration according to the above-described embodiment. For example, a decelerating mechanism part of a simple planetary gear structure may be used, or a decelerating mechanism of a so-called bending-meshing planetary gear structure may be used.

In the above-described embodiments, the friction power transmitting means having the pulley and the belt is employed as the rotation transmitting means. However, for example, the rotation transmitting means using a gear mechanismmay be employed. In this case, for example, as shown in the example in Fig. 1 (or Figs. 3 and 5), the end of the cover (74) may extend inward in the radial direction instead of the oil seal 51, and an oil seal may be disposed so as to seal the extended portion and the axial end surface of the gear. Accordingly, it is possible to satisfactorily lubricate the gear portion of the gear. In the case where the rotation transmitting means is formed by the gear mechanism, it is possible to minimally reduce the axial length of the rotation transmitting means, and thus to further reduce the entire axial length of the decelerating device.

Since it is not necessary to prepare a particular rotation detector having, for example, a large-diameter hollow portion upon detecting the rotation speed of the output shaft of the decelerating device, the invention is particularly suitable for a closed control or the like of a robot or a machining tool.

## Claims

1. A rotation detector attachment decelerating device (G1) having a function of detecting a rotation of an output shaft (48), the rotation detector attachment decelerating device (G1) comprising:
an auxiliary rotation shaft (58) which is disposed in parallel to the output shaft (48), the auxiliary rotation shaft (58) being offset from an axis of the output shaft (48);
rotation transmitting means (60) for transmitting the rotation of the output shaft (48) to the auxiliary rotation shaft (58), wherein the rotation transmitting means (60) includes a first pulley (64) which is mounted to the output shaft (48), a second pulley (66) which is mounted to the auxiliary rotation shaft (58), and a belt (68) which connects the first pulley (64) to the second pulley (66); and
a rotation detector (62) which detects a rotation of the auxiliary rotation shaft (58),
wherein the rotation of the output shaft (48) is detected by detecting the rotation of the auxiliary rotation shaft (58) using the rotation detector (62).

2. The rotation detector attachment decelerating device according to claim 1, wherein an effective diameter (d2) of the second pulley (66) is smaller than that (d1) of the first pulley (64).

3. The rotation detector attachment decelerating device according to any one of claims 1 or 2,
wherein the auxiliary rotation shaft (58) is supported in a cantilever manner by a bearing (78, 80) disposed in a casing (76) of the rotation detector (62).

4. The rotation detector attachment decelerating device according to any one of claims 1 to 3,
wherein the rotation transmitting means (60) includes a rotation body (66) which rotates together with the auxiliary rotation shaft (58), and a maximum diameter (d4) of the rotation body (66) is smaller than that (d3) of the rotation detector (62).

5. The rotation detector attachment decelerating device according to any one of claims 1 to 4,
wherein a decelerating mechanism part of the decelerating device (G1) is formed as a hollow-type decelerating mechanism part which has a hollow portion (H1) axially penetrating a radial center portion thereof, and a rotation body (64) of the rotation transmitting means (60) rotating together with the output shaft (48) is formed as a hollow-type rotation body which has a hollow portion (H2) axially penetrating a radial center portion thereof, wherein a protection pipe (102) is disposed from the hollow portion (H1) of the decelerating device to the hollow portion (H2) of the rotation body (64), and
wherein a part of the protection pipe (102) is fixed to a casing (46F) of the decelerating device, and an oil seal (104) for sealing a lubricant of the decelerating device is disposed between the other part of the protection pipe (102) and the inner periphery of the hollow portion (H2) of the rotation body (64).

6. The rotation detector attachment decelerating device according to any one of claims 1 to 5,
wherein the decelerating device (G1) includes a motor (M1) which supplies driving force to the decelerating mechanism part,
wherein the decelerating mechanism part is formed as the hollow-type decelerating mechanism part which has the hollow portion (H1) axially penetrating the radial center portion thereof,
wherein an axis (02) of the motor (M1) is offset from an axis (O1) of the hollow portion (H1) of the decelerating mechanism part, and
wherein the motor (M1) overlaps with at least a part of the rotation detector (62) when seen in the axial direction of the motor (M1).

## Patentansprüche

1. Verlangsamungsvorrichtung (G1) für eine Rotationsdetektoranbringung mit einer Funktion des Detektierens einer Rotation einer Abtriebswelle (48), wobei die Verlangsamungsvorrichtung (G1) der Rotationsdetektoranbringung Folgendes aufweist:
eine Hilfsrotationswelle (58), die parallel zu der Abtriebswelle (48) angeordnet ist, wobei die Hilfsrotationswelle (58) von einer Achse der Abtriebswelle (48) versetzt ist;
ein Rotationsübertragungsmittel (60) zum Übertragen der Rotation der Abtriebswelle (48) auf die Hilfsrotationswelle (58), wobei das Rotationsübertragungsmittel (60) eine erste Scheibe (64), die an der Abtriebswelle (48) angebracht ist, eine zweite Scheibe (66), die an der Hilfsrotationswelle (58) angebracht ist, und einen Riemen (68) aufweist, der die erste Scheibe (64) und
die zweite Scheibe (66) verbindet; und
einen Rotationsdetektor (62), der eine Rotation der Hilfsrotationswelle (58) detektiert,
wobei die Rotation der Abtriebswelle (48) durch Detektieren der Rotation der Hilfsrotationswelle (58) unter Verwendung des Rotationsdetektors (62) detektiert wird.

2. Verlangsamungsvorrichtung für eine Rotationsdetektoranbringung gemäß Anspruch 1, wobei ein effektiver Durchmesser (d2) der zweiten Scheibe (66) kleiner als der (d1) der ersten Scheibe (64) ist.

3. Verlangsamungsvorrichtung für eine Rotationsdetektoranbringung gemäß einem der Ansprüche 1 oder 2, wobei die Hilfsrotationswelle (58) in einer auskragenden Art und Weise durch ein Lager (78, 80) getragen bzw. gelagert wird, das in einem Gehäuse (76) des Rotationsdetektors (62) angeordnet ist.

4. Verlangsamungsvorrichtung für eine Rotationsdetektoranbringung gemäß einem der Ansprüche 1 bis 3, wobei das Rotationsübertragungsmittel (60) einen Rotationskörper (66) aufweist, der sich gemeinsam mit der Hilfsrotationswelle (58) dreht, und ein maximaler Durchmesser (d4) des Rotationskörpers (66) kleiner als der (d3) des Rotationsdetektors (62) ist.

5. Verlangsamungsvorrichtung für eine Rotationsdetektoranbringung gemäß einem der Ansprüche 1 bis 4,
wobei ein Verlangsamungs- bzw. Bremsmechanismusteil der Verlangsamungsvorrichtung (G1) als ein Bremsmechanismusteil der Hohlbauart gebildet ist, der einen hohlen Teil (H1) aufweist, der in axialer Weise dessen radialen Mittelteil durchdringt, und wobei ein Rotationskörper (64) des Rotationsübertragungsmechanismus (60), der gemeinsam mit der Abtriebswelle (48) rotiert, als ein Rotationskörper der Hohlbauart gebildet ist, der einen hohlen Teil (H2) aufweist, der in axialer Weise dessen radialen Mittelteil durchdringt, wobei ein Schutzrohr (102) von dem hohlen Teil (H1) der Verlangsamungsvorrichtung zu dem hohlen Teil (H2) des Rotationskörpers (64) hin angeordnet ist, und
wobei ein Teil des Schutzrohrs (102) an einem Gehäuse (46F) der Verlangsamungsvorrichtung befestigt ist, und eine Öldichtung (104) zum Abdichten eines Schmiermittels der Verlangsamungsvorrichtung zwischen dem anderen Teil des Schutzrohrs (102) und dem Innenumfang des hohlen Teils (H2) des Rotationskörpers (64) angeordnet ist.

6. Verlangsamungsvorrichtung für eine Rotationsdetektoranbringung gemäß einem der Ansprüche 1 bis 5,
wobei die Verlangsamungsvorrichtung (G1) einen Motor (M1) aufweist, der eine Antriebskraft an den Bremsmechanismusteil liefert,
wobei der Bremsmechanismusteil als ein Bremsmechanismusteil der Hohlbauart gebildet ist, bei dem der hohle Teil (H1) axial dessen radialen Mittelteil durchdringt,
wobei eine Achse (02) des Motors (M1) von einer Achse (O1) des hohlen Teils (H1) des Bremsmechanismusteils versetzt ist, und
wobei sich der Motor (M1) mit zumindest einem Teil des Rotationsdetektors (62) bei Betrachtung aus der axialen Richtung des Motors (M1) überlappt.

## Revendications

1. Dispositif de décélération de fixation de détecteur de rotation (G1) ayant pour fonction de détecter la rotation d'un arbre de sortie (48), le dispositif de décélération de fixation de détecteur de rotation (G1) comprenant :
un arbre de rotation auxiliaire (58) qui est disposé en parallèle avec l'arbre de sortie (48), l'arbre de rotation auxiliaire (58) étant décalé par rapport à l'axe de l'arbre de sortie (48) ;
des moyens de transmission de rotation (60) pour transmettre la rotation de l'arbre de sortie (48) à l'arbre de rotation auxiliaire (58), les moyens de transmission de rotation (60) comprenant une première poulie (64) qui est montée sur l'arbre de sortie (48), une deuxième poulie (66) qui est montée sur l'arbre de rotation auxiliaire (58), et une courroie (68) qui connecte la première poulie (64) à la deuxième poulie (66) ; et
un détecteur de rotation (62) qui détecte la rotation de l'arbre de rotation auxiliaire (58),
dans lequel la rotation de l'arbre de sortie (48) est détectée en détectant la rotation de l'arbre de rotation auxiliaire (58) en utilisant le détecteur de rotation (62).

2. Dispositif de décélération de fixation de détecteur de rotation selon la revendication 1, dans lequel le diamètre effectif (d2) de la deuxième poulie (66) est inférieur à celui (d1) de la première poulie (64).

3. Dispositif de décélération de fixation de détecteur de rotation selon l'une quelconque des revendications 1 ou 2,
dans lequel l'arbre de rotation auxiliaire (58) est supporté en porte à faux par un roulement (78, 80) disposé dans un carter (76) du détecteur de rotation (62).

4. Dispositif de décélération de fixation de détecteur de rotation selon l'une quelconque des revendications 1 à 3,
dans lequel les moyens de transmission de rotation (60) comprennent un corps de rotation (66) qui tourne conjointement avec l'arbre de rotation auxiliaire (58), et le diamètre maximum (d4) du corps de rotation (66) est inférieur à celui (d3) du détecteur de rotation (62).

5. Dispositif de décélération de fixation de détecteur de rotation selon l'une quelconque des revendications 1 à 4,
dans lequel une pièce de mécanisme de décélération de dispositif de décélération (G1) est formée en forme de pièce de mécanisme de décélération de type creux qui comporte une portion creuse (H1) pénétrant axialement une portion centrale radiale, et un corps de rotation (64) des moyens de transmission de rotation (60) tournant conjointement avec l'arbre de sortie (48) est formé en forme de corps de rotation de type creux qui comporte une portion creuse (H2) pénétrant axialement une portion centrale radiale, dans lequel un tuyau de protection (102) est disposé à partir de la portion creuse (H1) du dispositif de décélération jusqu'à la portion creuse (H2) du corps de rotation (64), et
dans lequel une partie du tuyau de protection (102) est fixée à un carter (46F) du dispositif de décélération, et un joint d'huile (104) destiné à tenir étanche un lubrifiant du dispositif de décélération est disposé entre l'autre partie du tuyau de protection (102) et la périphérie intérieure de la portion creuse (H2) du corps de rotation (64).

6. Dispositif de décélération de fixation de détecteur de rotation selon l'une quelconque des revendications 1 à 5,
dans lequel le dispositif de décélération (G1) comprend un moteur (M1) qui fournit une force motrice à la pièce de mécanisme de décélération,
dans lequel la pièce de mécanisme de décélération est formée sous forme d'une pièce de mécanisme de décélération de type creux qui comporte la portion creuse (H1) pénétrant axialement la portion centrale radiale de celle-ci,
dans lequel un axe (02) du moteur (M1) est décalé par rapport à un axe (O1) de la portion creuse (H1) de la pièce de mécanisme de décélération, et
dans lequel le moteur (M1) est en chevauchement avec au moins une partie du détecteur de rotation (62) dans une vue dans la direction axiale du moteur (M1).
